# EUROPÄISCHE PATENTSCHRIFT

(11) **EP 1 455 978 B1**
(45) Veröffentlichungstag und Bekanntmachung des Hinweises auf die Patenterteilung: **19.10.2005**
(21) Anmeldenummer: 02793032.0
(22) Anmeldetag: 16.12.2002
(51) Int. Cl.: B23B 51/00

(54) **SCHLAG- ODER HAMMERBOHRER**
PERCUSSION OR HAMMER DRILL
OUTIL DE PERCAGE PAR PERCUSSION OU PAR MARTELAGE

(30) Priorität: 17.12.2001 LU 90862
(43) Veröffentlichungstag der Anmeldung: 15.09.2004
(73) Patentinhaber: Ceratizit S.A., 8201 Mamer (LU)
(72) Erfinder: MAGIN, Michael, 54290 TRIER (DE)
(74) Vertreter: Kihn, Pierre Emile Joseph
(86) Internationale Anmeldenummer: PCT/EP2002/014329
(87) Internationale Veröffentlichungsnummer: WO 2003/051565

(56) Entgegenhaltungen:
- EP-A- 1 034 864
- WO-A-00/25967
- US-A- 5 957 631
- US-A1- 2001 013 431

## Beschreibung

Die vorliegende Erfindung betrifft einen Schlag- oder Hammerbohrer.

Beim Bohren führt ein Schlag- oder Hammerbohrer, auch noch als Mauer-, Beton- oder Steinbohrer bezeichnet, eine Schlagbewegung in Richtung der Bohrerachse und eine Drehbewegung um die Bohrerachse aus. Beide Bewegungskomponenten tragen zum Materialabbau in einem Bohrloch bei. Die axiale Schlagbewegung zertrümmert das Material im Bohrloch. Die Drehbewegung verursacht durch Abrasion eine Zerkleinerung des Materials zu Bohrstaub und transportiert den Bohrstaub aus dem Bohrloch heraus.

Bekannte Schlag- oder Hammerbohrer bestehen aus einem Bohrerschaft in dessen Kopfende eine Hartmetallplatte, die sogenannten Bohrerplatte, eingesetzt ist. Am Schaft entlang verlaufen spiralförmige Nuten für die Abfuhr des Bohrstaubs aus dem Bohrloch. Die Bohrerplatte erstreckt sich durchgehend über den Durchmesser des Bohrerschaftes. In ihrer freiliegende Stimfläche bilden keilförmig angeordnete Span- und Freiflächen Schneidkanten aus. Letztere umfassen zwei lineare Hauptschneiden, die parallel zu einer durch die Bohrerachse verlaufenden Ebene versetzt sind, und eine Querschneide, welche die beiden Hauptschneiden durch die Bohrerachse verbindet. Um eine hinreichende Zentrierung beim Anbohren zu gewährleisten, ist ein Spitzenwinkel von maximal 130° zwischen den beiden Hauptschneiden vorgesehen.

Eine solche Bohrerplatte ist z.B. aus der US-A-2001/0013431 bekannt.

Eine Aufgabe der vorliegenden Erfindung ist es den Materialabbau im Bohrloch durch eine entsprechende Gestaltung der Bohrerplatte zu optimieren. Diese Aufgabe wird u.a. durch einen Schlag- oder Hammerbohrer nach Anspruch 1 gelöst.

Ein solcher Schlag- oder Hammerbohrer, auch noch mit dem Sammelbegriff "Gesteinbohrer" bezeichnet, umfasst in bekannter Art und Weise einen Bohrerschaft und eine in das Kopfende des Bohrerschaftes eingesetzte Bohrerplatte. Letztere erstreckt sich durchgehend über den Durchmesser des Bohrerschaftes und weist eine freiliegende vordere Stimfläche auf. In dieser Stimfläche bilden - gemäss einer ersten Ausführung - keilförmig angeordnete Span- und Freiflächen zwei sich diametral gegenüberliegende lineare Hauptschneiden. Eine durch die Bohrerachse verlaufende Ebene bildet hierbei eine Mittelebene der beiden Hauptschneiden. Mit dieser Anordnung der Hauptschneiden wird die Schlagenergie vorteilhafter In das Material eingeleitet, als mit zwei Hauptschneiden die parallel zu einer durch die Bohrerachse verlaufenden Ebene versetzt sind. Die Schlagenergie wird somit effektvaller für den Materialabbau im Bohrloch eingesetzt.

Eine weitere Optimierung des Materialabbaus im Bohrloch wird dadurch gewährleistet, dass die beiden Hauptschneiden einen Spitzenwinkel ausbilden, der größer als 130° ist, und vorzugsweise im Bereich von 150° bis 170°, bzw. von 155° bis 165° liegt. Die Vergrößerung des Spitzenwinkels gewährleistet ebenfalls einen effektvolleren Einsatz der Schlagenergie für den Abbau des Materials im Bohrloch.

Um bei einem großen Spitzenwinkel eine hinreichende Zentrierung beim Anbohren zu gewährleisten, ist vorteilhaft eine Zentrierspitze zwischen den beiden sich diametral gegenüberliegenden Hauptschneiden ausgebildet Hierbei ist der Spitzenwinkel der Zentrierspitze dann kleiner als der Spitzenwinkel zwischen den beiden Hauptschneiden. Er liegt z.B. im Bereich von 80° bis 130°.

Zwischen der Zentrierspitze und den Spanflächen, bzw. den Freiflächen sind vorteilhaft abgerundete Übergangsflächen vorgesehen, um Kerbwirkungen zwischen der Zentrierspitze und den Hauptschneiden zu verhindern.

Die Zentrierspitze kann flächensymmetrisch zu zwei senkrecht zueinander stehenden Ebenen ausgebildet sein, wobei beide Ebenen durch die Bohrerachse verlaufen und eine der beiden Ebenen zusätzlich die Mittelebene der beiden Hauptschneiden bildet. Eine solche Flächensymmetrie ermöglicht eine Zentrierspitze zu schaffen, die zu einer hohen Abbauleistung, einer hohen Stabilität und einer ausgezeichneten Verschleißbeständigkeit der Bohrerplatte beiträgt. Alternativ dazu kann die Zentrierspitze auch rotationssymmetrisch ausgebildet sein.

Im folgenden wird nun eine beispielhafte Ausgestattung der Erfindung anhand der beiliegenden Figuren beschrieben. Es zeigen:
- Fig.1:: einen Ausschnitt eines erfindungsgemäßen Schlagbohrers in einem Bohrloch;
- Fig.2:: einen Aufriss einer Bohrerplatte;
- Fig.3:: eine Draufsicht der Stimseite der Bohrerplatte der Figur 2;
- Fig.4:: eine Seitenansicht der Bohrerplatte der Figur 2;
- Fig.5:: eine perspektivische Ansicht der Bohrerplatte der Figur 2;
- Fig.6:: einen vergrößerter Ausschnitt aus einer perspektivischen Ansicht der Bohrerplatte der Figur 2;

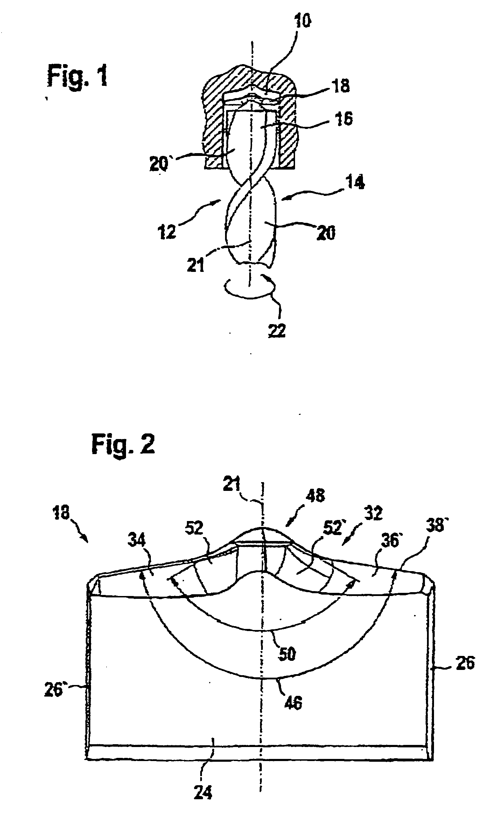

Der in Figur 1 beim Bohren in einem Bohrloch 10 gezeigte Schlag- oder Hammerbohrer 12 besteht aus einem Bohrerschaft 14 in dessen Kopfende 16 eine Hartmetallplatte 18, die sogenannten Bohrer- oder Schneidplatte, eingesetzt ist Letztere erstreckt sich durchgehend über den Durchmesser des Kopfendes 16. Am Bohrerschaft 14 entlang verlaufen spiralförmige Nuten 20, 20' für die Abfuhr des Bohrstaubs aus dem Bohrloch 10. Mit dem Bezugszeichen 21 ist die Bohrerachse bezeichnet. Der Schlagbohrer 12 führt eine Schlagbewegung in Richtung der Bohrerachse 21 und eine Drehbewegung (siehe Pfeil 22) um die Bohrerachse 21 aus. Beide Bewegungskomponenten tragen zum Abbau des Materials in einem Bohrloch 10 bei. Die axiale Schlagbewegung zertrümmert das Material im Bohrloch 10. Die Drehbewegung erzeugt durch Abrasion eine Zerkleinerung des Materials zu Bohrstaub und transportiert den Bohrstaub aus dem Bohrloch 10 heraus.

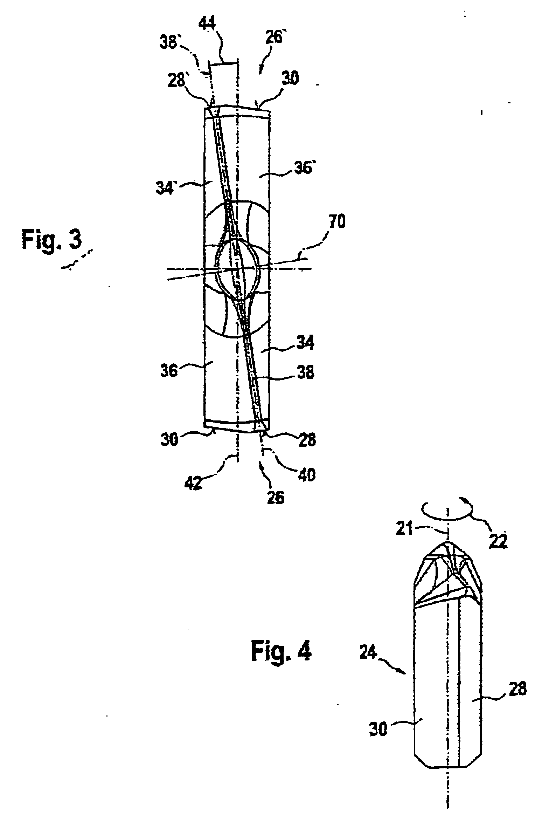

Eine erste Ausführung einer Bohrerplatte 18 für einen erfindungsgemäßen Schlag- oder Hammerbohrer 12 wird anhand der Figuren 2 bis 6 beschrieben. Eine solche Bohrerplatte 18 umfasst einen im wesentlichen prismatischen Befestigungsschaft 24, der in einen entsprechenden Schlitz im Kopfende 16 des Bohrerschaftes 14 auf eingelötet wird (siehe auch Fig. 3 in welcher die Umrisse des Kopfendes 16 gestrichelt angedeutet sind). Der Befestigungsschaft 24 weist zwei Schmalseiten 26 und 26' auf, die jeweils durch eine zylindrische Fläche 28, 28' und eine ebene Fläche 30, 30' ausgebildet werden. Die zylindrische Fläche 28, 28' ist jeweils der ebenen Fläche 30, 30' in Drehrichtung vorgelagert und gewährleistet die Führung des Bohrers 12 im Bohrloch 10. Die ebene Fläche 30, 30' liegt, mit Bezug auf den Durchmesser des Bohrlochs 10, ein wenig zurück, wodurch eine reduzierte Reibung der Schmalseiten 26, 26' im Bohrloch erzielt wird.

Das Ende der Bohrerplatte 18 das aus dem Kopfende 16 des Bohrerschaftes 14 axial herausragt weist eine profilierte Stimfläche 32 auf, deren Profil im folgenden näher beschrieben wird. In dieser freiliegenden Stimfläche 32 bilden jeweils eine Spanfläche 34, 34' und eine Freifläche 36, 36', die keilförmig zueinander angeordnet sind, eine Hauptschneide 38,38' aus. Wie am besten aus Fig. 3 ersichtlich, weist die Bohrerplatte 18 zwei lineare Hauptschneiden 38, 38' auf, die sich diametral derart gegenüberliegen, dass eine durch die Bohrerachse 21 verlaufenden Ebene 40 eine Mittelebene der beiden Hauptschneiden 38, 38' bildet In der gezeigten Bohrerplatte 18 bildet diese Mittelebene 40 mit der Mittelebene 42 des Befestigungschaftes 24 einen Winkel 44 von zirka 8°. Die Mittelebene 42 schneidet hierbei die beiden Schmalseiten 26, 26' jeweils kurz nach dem Übergang der ebenen Fläche 30, 30' in die zylindrische Fläche 28, 28'.

In Fig. 2 sieht man, dass die beiden Hauptschneiden 38, 38' von innen nach außen abfallen. Sie bilden in der Mittelebene 40 einen sogenannten Spitzenwinkel 46 aus, der in der gezeigten Bohrerplatte 18 beispielsweise 162° beträgt (bei herkömmlichen Hammerbohrem beträgt dieser Spitzenwinkel maximal 130°). Der sehr stumpfe Spitzenwinkel 46, sowie die gemeinsame Mittelebene 40 der beiden Hauptschneiden 38, 38' bewirken, dass die Schlagenergie beim Bohren sehr konzentriert und reibungsarm in das Material eingeleitet wird. Sie tragen somit zu einer wesentlichen Optimierung der Materialzertrümmerung im Bohrloch 10 bei.

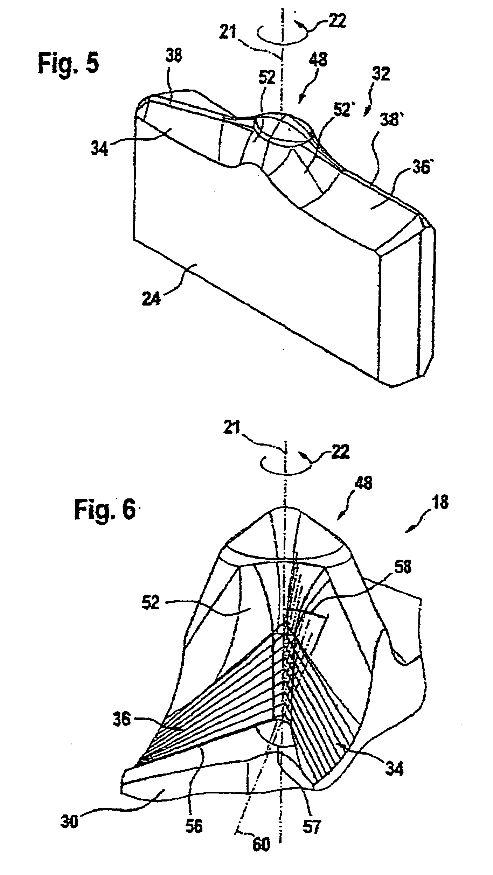

Wie am besten aus Fig. 2 und 5 ersichtlich, sind die beiden Hauptschneiden 38, 38' durch eine Zentrierspitze 48 getrennt, welche auf der Bohrerachse 21 zentriert ist. Die Zentrierspitze 48 ist flächensymmetrisch zu zwei senkrecht zueinander stehenden Ebenen 40, 70. Die erste Ebene 40 ist die weiter oben beschriebene Mittelebene. Die zweite Ebene 70 enthält ebenfalls die Bohrerachse 21 und ist senkrecht zur Mittelebene 40. Wie aus Fig. 3 ersichtlich, hat die Zentrierspitze 48 einen ovalen Querschnitt, wobei die längste Achse des Ovales in der Mittelebene 40 und die kürzeste Achse des Ovales in der Ebene 70 liegt. Wie aus einer der Fig. 5 ersichtlich, weist die Zentrierspitze 48 in Richtung der Ebene 70 im wesentlichen die Form eines aus dem Bergbau bekannten Meißels auf. In Richtung der Mittelebene 40 ist die sie hingegen deutlich stumpfer geformt Es bleibt anzumerken, dass die Zentrierspitze 48 zu einer hohen Abbauleistung, einer hohen Stabilität und einer ausgezeichneten Verschleißbeständigkeit der Bohrerplatte 18 beiträgt Die abgerundeten Übergangsflächen 52, 52' sollen Kerbwirkungen zwischen Zentrierspitze 48 und den Hauptschneiden 38, 38' verhindem, welche zu bruchauslösenden Spannungsspitzen beim Bohren führen können. Es bleibt anzumerken, dass die Übergangsflächen 52, 52' in den Übergangsbereichen Zentrierspitze-Spanfläche und Zentrierspitze-Freifläche jeweils einen unterschiedlichen Radius aufweisen können.

Anhand der Fig. 6 wird nun der durch der die Spanfläche 34 und die Freifläche 36 ausgebildete Schneidkeil näher beschrieben. Dieser Schneidkeil wird, für jeden Punkt einer Hauptschneide 38, 38', in einer Schnittebene, die senkrecht zur Mittelebene 40 und parallel zur Rotationsachse 21 ist, durch eine Tangente 54 zur Spanfläche 34 und eine Tangente 56 zur Freifläche 36 definiert. Da die Abbildung der Spanflächen 34, 34' und Freiflächen 36, 36' in der Bohrerplatte 18 der Fig. 6 in der Schnitteben im wesentlichen eben sind, sind die Tangenten 54, 56 eigentlich die Schnittlinien zwischen Spanfläche 34, 34', bzw. Freifläche 36, 36', und der Schnittebene.

Es ist anzumerken, dass die Spitze des Schneidkeils abgerundet ist, oder anders ausgedrückt, dass die Hauptschneiden 38, 38' jeweils eine Abrundung aufweisen. Ein großer Kantenradius begünstigt hierbei die Stabilität der Bohrerplatte. Ein kleinerer Kantenradius begünstigt hingegen die Bohrleistung. In der Bohrerplatte 18 ist der Kantenradius der Hauptschneiden 38, 38', wie am besten aus Fig. 3 ersichtlich, im Innenbereich weitgehend konstant, wird in der Nähe der beiden Schmalseiten 26, 26' jedoch wesentlich größer. Hierdurch werden die Hauptschneiden 38, 38' im besonders kritischen Außenbereich verstärkt, weisen im Innenbereich jedoch einen relativ kleinen Kantenradius auf, der die Bohrleistung begünstigt.

Zurückkommend auf Fig. 6 ist weiterhin festzustellen, dass der Winkel des Schneidkeils (nachfolgend Keilwinkel 57 genannt) entlang der Hauptschneiden 38, 38' nicht konstant ist, sondern von innen nach außen zunimmt. In der Bohrerplatte 18 der Fig. 6 vergrößert sich der Keilwinkel 57 beispielsweise jeweils linear mit dem Radius, von ungefähr 80° an den beiden Übergangsflächen 52, 52' auf ungefähr 110° an den beiden Schmalseiten 26, 26'. Es ist ebenfalls festzustellen, dass die Ausrichtung des Schneidkeils entlang der Hauptschneiden 38, 38' auch nicht konstant ist. Diese Ausrichtung wird durch den Winkel 58 zwischen der Winkelhalbierenden 60 des Schneidkeils und der Mittelebene 40 gemessen. In der Bohrerplatte 18 der Fig. 6 vergrößert sich dieser Winkel 58 mit dem Radius, von ungefähr 5° an den beiden Übergangsflächen 52, 52' auf ungefähr 25° an den beiden Schmalseiten 26, 26'. Sowohl die radial veränderliche Ausrichtung des Schneidkeils, als auch der radial veränderliche Keilwinkel 57 des Schneidkeils bewirken eine bessere Stabilität der Bohrerplatte 18. Sie wird besonders in ihrem radialen Außenbereich, d.h. dort wo die Tangentialgeschwindigkeit am größten ist, wesentlich stärker, und weist trotzdem eine ausgezeichnete Bohrleistung auf. Weiterhin ist anzumerken, dass ein größerer Keilwinkel 57 im Außenbereich hier zur einer größeren Materialansammlung führt, so dass der bei Schlag- und Hammerbohrem zu beobachtende Eckenverschleiß der Bohrerplatte reduziert wird. Ein solcher Eckenverschleiß macht sich u.a. auch in einem verkleinerten Durchmesser des Bohrlochs 10 bemerkbar, so dass ein langsamer Eckverschleiß die Lebensdauer des Bohrers 12 erhöht.

Weiterhin hat es sich bei den hier verwendeten sehr stumpfen Spitzenwinkel 46 als vorteilhaft herausgestellt, die Außenkante von Schneidkante, Frei- und Spanfläche mit einer Schutzfase 54, 54' zu versehen um so die Stabilität der Schneidplatte zusätzlich zu vergrößern. Die dargestellte Form der Schutzfase 54, 54' ist eine von mehreren möglichen Ausgestaltungen.

| Referenzliste | |
|---|---|
| 10 | Bohrloch |
| 12 | Schlag- oder Hammerbohrer |
| 14 | Bohrerschaft |
| 16 | Kopfende |
| 18 | Hartmetallplatte |
| 20,20' | spiralförmige Nuten |
| 21 | Bohrerachse |
| 22 | Drehbewegung |
| 24 | Befestigungsschaft |
| 26, 26' | zwei Schmalseiten |
| 28, 28' | zylindrische Fläche |
| 30, 30' | ebenen Fläche |
| 32 | Stimfläche |
| 34, 34' | Spanfläche |
| 36, 36' | Freifläche |
| 38, 38' | Hauptschneiden |
| 40 | Mittelebene |
| 42 | Mittelebene |
| 44 | Winkel |
| 46 | Spitzenwinkel |
| 48 | Zentrierspitze |
| 50 | Spitzenwinkel |
| 52, 52' | Übergangsflächen |
| 54, 54' | Schutzfase |
| 57 | Keilwinkel |
| 58 | Winkel |
| 60 | Winkelhalbierenden |

## Patentansprüche

1. Schlag- oder Hammerbohrer umfassend:
einen Bohrerschaft (14) mit einem Kopfende (16) und
eine in das Kopfende (16) eingesetzte Bohrerplatte (18, 18'), die sich durchgehend Ober den Durchmesser des Bohrerschaftes (14) erstreckt und eine freiliegende vordere Stimfläche (32) aufweist;
wobei keilförmig angeordnete Span- und Freiflächen (34, 34', 36, 36') in dieser Stimfläche (32) zwei sich diametral gegenüberliegende Hauptschneiden (38, 38') ausbilden,
**dadurch gekennzeichnet, dass** die beiden Hauptschneiden in einer durch die Borherachse (21) verlaufenden Mittelebene (40) liegen.

2. Bohrer nach Anspruch 1, **gekennzeichnet durch** einen Spitzenwinkel (46) zwischen den beiden Hauptschneiden (38, 38') der im Bereich von 140° bis 180° liegt.

3. Bohrer nach Anspruch 1, **gekennzeichnet durch** einen Spitzenwinkel (46) zwischen den beiden Hauptschneiden (38, 38') der Im Bereich von 150° bis 170° liegt.

4. Bohrer nach Anspruch 1, **gekennzeichnet durch** einen Spitzenwinkel (46) zwischen den beiden Hauptschneiden (38, 38') der im Bereich von 155° bis 165° liegt.

5. Bohrer nach einem der Ansprüche 1 bis 4, **gekennzeichnet durch** eine Zentrierspitze (48, 48') die zwischen den beiden sich diametral gegenüberliegende Hauptschneiden (38, 38') ausgebildet ist, wobei der Spitzenwinkel der Zentrierspitze (48, 48') kleiner als der Spitzenwinkel (46) zwischen den beiden Hauptschneiden (38, 38') ist.

6. Bohrer nach Anspruch 5, **gekennzeichnet durch** abgerundete Übergangsflächen (52, 52') die zwischen der Zentrierspitze (48, 48') und den Spanflächen (34, 34'), bzw. den Freiflächen (36, 36') angeordnet sind.

7. Bohrer nach Anspruch 5 oder 6, **dadurch gekennzeichnet, dass** die Zentrierspitze (48) rotationssymmetrisch ausgebildet ist.

8. Bohrer nach Anspruch 5 oder 6, **dadurch gekennzeichnet, dass** die Zentrierspitze (48') flächensymmetrisch zu zwei senkrecht zueinander stehenden Ebenen ausgebildet ist, wobei beide Ebenen durch die Bohrerachse (21) verlaufen und eine der beiden Ebenen zusätzlich die Mittelebene (40) der beiden Hauptschneiden (38, 38') bildet.

9. Bohrer nach einem der Ansprüche 5 bis 8, **gekennzeichnet durch** einen Spitzenwinkel (50) der Zentrierspitze (48, 48') der im Bereich von 80° bis 130° liegt.

10. Bohrer nach einem der Ansprüche 1 bis 9, **gekennzeichnet durch** einen Keilwinkel (57) an den Hauptschneiden (38, 38') der radial von innen nach außen zunimmt.

11. Bohrer nach Anspruch 10, **dadurch gekennzeichnet, daß** der Keilwinkel (57) um 20° bis 40° zunimmt.

12. Bohrer nach Anspruch 11, **dadurch gekennzeichnet, daß** der kleinste Keilwinkel (57) an den Hauptschneiden (38, 38') im Bereich zwischen 70° und 90° liegt.

13. Bohrer nach einem der Ansprüche 1 bis 12, **dadurch gekennzeichnet, dass** der Winkel (58) zwischen der Winkelhalbierenden (60) des Schneidkeils und der Mittelebene (40) der beiden Hauptschneiden (38, 38') entlang der Hauptschneiden (38, 38') von innen nach außen zunimmt.

14. Bohrer nach einem der Ansprüche 1 bis 13, **gekennzeichnet durch** einen abgerundeten Hauptschneidenkeil dessen Radius im Außenbereich größer als im Innenbereich ist.

## Claims

1. Percussion or hammer drill comprising:
a drill shaft (14) with a head end (16) and
a cutting plate (18, 18'), set in the head end (16), and extending over the full diameter of the drill shaft (14) and provided with an exposed front face (32);
with chip and free surfaces (34, 34', 36, 36') arranged in a wedge shape in this front face (32) to form two main cutting edges (38, 38') positioned diametrically opposite to each other;
**characterized in that** both main cutting edges lie in a central plane (40) passing through the drilling axis (21).

2. Drill according to Claim 1, **characterized by** an apex angle (46) between the two main cutting edges (38, 38') which lies in the range 140° to 180°.

3. Drill according to Claim 1, **characterized by** an apex angle (46) between the two main cutting edges (38, 38') which lies in the range 150° to 170°.

4. Drill according to Claim 1, **characterized by** an apex angle (46) between the two main cutting edges (38, 38') which lies in the range 155° to 165°.

5. Drill according to any one of Claims 1 to 4, **characterized by** a centring point (48, 48'), formed between the two diametrically opposed main cutting edges (38, 38'), the apex angle of the centring point (48, 48') being smaller than the apex angle (46) between the two main cutting edges (38, 38').

6. Drill according to Claim 5, **characterized by** rounded transition surfaces (52, 52') provided between the centring point (48, 48') and the chip surfaces (34, 34') or free surfaces (36, 36'), as the case may be.

7. Drill according to Claim 5 or 6, **characterized in that** the centring point (48) is made rotationally symmetrical in shape.

8. Drill according to Claim 5 or 6, **characterized in that** the centring point (48') is shaped in plane symmetry with respect to two planes perpendicular to each other, both of these planes running through the drilling axis (21) and one of the two also constituting the central plane (40) of the two main cutting edges (38, 38').

9. Drill according to any one of Claims 5 to 8, **characterized by** an apex angle (50) of the centring point (48, 48') which lies in the range 80° to 130°.

10. Drill according to any one of Claims 1 to 9, **characterized by** a wedge angle (57) between the main cutting edges (38, 38') which increases radially from the inner part towards the outer part.

11. Drill according to Claim 10, **characterized in that** the wedge angle (57) increases by 20° to 40°.

12. Drill according to Claim 11, **characterized in that** the smallest wedge angle (57) between the main cutting edges (38, 38') lies in the range 70° to 90°.

13. Drill according to any one of Claims 1 to 12, **characterized in that** the angle (58) between the angle bisector (60) of the cutting wedge and the central plane (40) of the main cutting edges (38, 38') increases outwards along the length of the main cutting edges (38, 38').

14. Drill according to any one of Claims 1 to 13, **characterized by** a rounded main cutting wedge of greater radius in its outer part than in its inner part.

## Revendications

1. Foret à rotation ou percussion comprenant :
une tige de foret (14) avec une extrémité de tête (16)
et une plaque de foret (18, 18') qui est placée dans l'extrémité de tête (16), qui s'étend de façon continue sur tout le diamètre de la tige de foret (14) et qui comporte une surface frontale avant (32) dégagée ;
des surfaces de coupe et de dépouille (34, 34', 36, 36') disposées en forme de coin concevant dans cette surface frontale (32) deux arêtes coupantes (38, 38') diamétralement opposées,
**caractérisé en ce que** les deux arêtes coupantes se trouvent dans un plan médian (40) passant par l'axe (21) du foret.

2. Foret selon la revendication 1, **caractérisé par** un angle de sommet (46) entre les deux arêtes coupantes (38, 38') qui est compris entre 140° et 180°.

3. Foret selon la revendication 1, **caractérisé par** un angle de sommet (46) entre les deux arêtes coupantes (38, 38') qui est compris entre 150° et 170°.

4. Foret selon la revendication 1, **caractérisé par** un angle de sommet (46) entre les deux arêtes coupantes (38, 38') qui est compris entre 155° et 165°.

5. Foret selon l'une des revendications 1 à 4, **caractérisé par** une pointe de centrage (48, 48') qui est formée entre les deux arêtes coupantes (38, 38') diamétralement opposées, l'angle de sommet de la pointe de centrage (48, 48') étant plus petit que l'angle de sommet (46) entre les deux arêtes coupantes (38, 38').

6. Foret selon la revendication 5, **caractérisé par** des surfaces de transition arrondies (52, 52') qui sont situées entre la pointe de centrage (48, 48') et les surfaces de coupe (34, 34') ou les surfaces de dépouille (36, 36').

7. Foret selon la revendication 5 ou 6, **caractérisé en ce que** la pointe de centrage (48) est conçue à symétrie de révolution.

8. Foret selon la revendication 5 ou 6, **caractérisé en ce que** la pointe de centrage (48') est conçue à symétrie de surface par rapport à deux plans perpendiculaires l'un à l'autre, les deux plans passant par l'axe (21) du foret et l'un des deux plans formant en plus le plan médian (40) des deux arêtes coupantes (38, 38').

9. Foret selon l'une des revendications 5 à 8, **caractérisé par** un angle de sommet (50) de la pointe de centrage (48, 48') qui est compris entre 80° et 130°.

10. Foret selon l'une des revendications 1 à 9, **caractérisé par** un angle tranchant (57) sur les arêtes coupantes (38, 38') qui augmente radialement de l'intérieur vers l'extérieur.

11. Foret selon la revendication 10, **caractérisé en ce que** l'angle tranchant (57) augmente de 20° à 40°.

12. Foret selon la revendication 11, **caractérisé en ce que** le plus petit angle tranchant (57) sur les arêtes coupantes (38, 38') est compris entre 70° et 90°.

13. Foret selon l'une des revendications 1 à 12, **caractérisé en ce que** l'angle (58) entre les bissectrices (60) du taillant et du plan médian (40) des deux arêtes coupantes (38, 38') augmente le long des arêtes coupantes (38, 38') de l'intérieur vers l'extérieur.

14. Foret selon l'une des revendications 1 à 13, **caractérisé par** un tranchant d'arête coupante arrondi dont le rayon est plus grand dans la partie extérieure que dans la partie intérieure.
